# EUROPEAN PATENT SPECIFICATION

(11) **EP 3 732 966 B1**
(45) Date of publication and mention of the grant of the patent: **15.07.2026**
(21) Application number: 18894322.9
(22) Date of filing: 05.09.2018
(51) Int. Cl.: A01N 35/02, A01P 3/00

(54) **USE OF A FUNGICIDAL COMPOSITION AS TREATMENT FOR POWDERY MILDEW**
VERWENDUNG EINER FUNGIZIDEN ZUSAMMENSETZUNG ALS BEHANDLUNG FÜR MEHLTAU
UTILISATION D'UNE COMPOSITION FONGICIDE COMME TRAITEMENT DE L'OÏDIUM

(30) Priority: 28.12.2017 ES 201731490
(43) Date of publication of application: 04.11.2020
(73) Proprietor: Desarrollo Agrícola y Minero, S.A., 50013 Zaragoza (ES)
(72) Inventor: SOLANS ARTIGAS, Carlos, 50013 Zaragoza (ES); MARTÍN ORO, Eitan, 50013 Zaragoza (ES)
(74) Representative: Schäfer, Matthias W.
(86) International application number: PCT/ES2018/070583
(87) International publication number: WO 2019/129902

(56) References cited:
- WO-A1-2018/172572
- WO-A2-97/35471
- ES-A1- 2 328 322
- ES-A1- 2 328 322
- FR-A1- 2 529 755
- FR-A1- 2 529 755
- US-A- 5 639 794
- US-A1- 2003 005 484
- US-A1- 2013 018 107
- US-A1- 2013 018 107
- ANONYMOUS: "cinnamaldehyde", INTERNET CITATION, 12 May 2009 (2009-05-12), pages 1 - 7, XP002528199, Retrieved from the Internet <URL:http://sitem.herts.ac.uk/aeru/footprint/en/Reports/1069.htm> [retrieved on 20090515]

## Description

This description relates, as its title indicates, to a new use of a composition with fungicidal phytosanitary activity, which has as the active ingredient, cinnamic aldehyde combined with terpene alcohol, for treatment against the disease known as powdery mildew in horticultural crops, which are strawberry crops.

### Field of the invention

The invention relates to the field of the use of phytosanitary products for the treatment of powdery mildew in horticultural crops, which are strawberry crops.

### Current State of the Art

To gain a better understanding of this description we will establish a series of definitions in advance:
Powdery mildew: Disease caused by a parasitic fungus whose vegetative apparatus forms a network of whitish, powdery filaments on the leaves of plants. There are many different types but in the case of the Cucurbitaceae, the fungus responsible is called Sphaerotheca fuliginea, in the case of strawberries it is Sphaerotheca macularis, in that of peppers it is Sphaerotheca erysiphales and in raspberries, Podosphaera aphanis.
Cinnamic aldehyde: Organic compound whose IUPAC name is (2E)-3-Phenylprop-2-enal and other names such as cinnamic aldehyde or cinnamaldehyde whose structural formula is C6H5CHCHCOH and molecular formula is C9H8O. This compound can be obtained from natural sources or by chemical synthesis.
Ethoxylated castor oil: The castor oil obtained by reaction with ethylene oxide through an ethoxylation reaction. The various ethoxylated castor oils are classified according to the number of moles of ethylene or degree of ethoxylation.
Ethoxylated castor oil with a low degree of ethoxylation: Ethoxylated castor oil with an ethoxylation degree of between 5 and 20 moles.
Ethoxylated castor oil with a high degree of ethoxylation: Ethoxylated castor oil with an ethoxylation degree greater than 20 moles.
Calcium alkyl aryl sulfonate solution: A liquid product obtained by dissolving calcium alkyl aryl sulfonate at a final concentration of between 45% and 70% weight/weight in a solvent.
C11-13 alcohols: A liquid product with a minimum content of 80% weight/weight of ethoxylated branched C11-C13 alcohols with >2.5 EO and characterised by CAS number: 68439-54-3
Terpene alcohol: In this description the term terpene alcohol is understood to be the liquid product formed mostly (more than 80% weight/weight) by a single monoterpene alcohol such as α-terpineol, or the multi-constituent mixture of terpene alcohols obtained essentially by monocyclic terpene alcohols (terpineols, 1-terpinen-4-ol, etc.) and, in a smaller proportion, by tri-cyclic terpene alcohols (fenchol, borneol, etc.).

Powdery mildew is a disease, which depending on the crop, is caused by different types of fungi. It is a leaf disease that represents a very significant limiting factor on the production of Cucurbitaceae, especially melon, watermelon, cucumber and courgette as well as on pepper, strawberry and raspberry crops worldwide. The disease affects the photosynthetic leaf area of the plant and can even affect the product of the plant and, consequently, the total production and quality of the harvest.

At present and as far as our knowledge goes, there exists a limited number of chemically synthesized, natural or microbiological phytosanitary products for the control of this disease worldwide. This has given rise to the onset of resistances in the fungus to treatment using these products, which leads to combinations of these phytosanitary products having to be used, as well as to the appearance of high levels of phytosanitary residues in fruit and to poor control of powdery mildew, with the consequent economic losses. Therefore, if new fungicides could be found with highly effective compositions and which also contribute to an improvement in toxicology, application safety and a decrease or absence of residues, then very significant environmental and economic gains could be achieved for that crop.

### Background of the invention

At present we know of certain procedures and products for treating powdery mildew, such as for instance, those described in patent ES0178125 "A procedure for obtaining a product against downy mildew and powdery mildew of the grapevine, applicable in one single treatment", ES8504435 "A procedure for obtaining a paste for combating powdery mildew", and EP1754412 "Biological process and suitable compositions for the treatment of plants, especially for vines", however they present the problem of using sulfur, which has a high environmental impact and is not advisable for food products for direct consumption.

Products are also known that use aromatic aldehydes, such as that described in patent EP0889691 "Use of aromatic aldehydes as pesticides" but employing a completely different composition, with low effectiveness.

Likewise patent WO2013040721 "Method and system for producing ozonated natural oils and the application thereof in the treatment of humans, animals and vegetables, and in aquaculture" describes the use of a completely different product, with low effectiveness.

Lastly, patent WO2010086103 "Use of succinate dehydrogenase inhibitors for controlling powdery mildew primary infections" advocates the use of fluopyram to control primary infections of powdery mildew in perennial crops, where fluopyram was applied to the perennial crop before the end of the preceding vegetative cycle.

US5639794 (A), WO9735471 (A2), and US2003005484 (A1) describe methods and compositions based upon natural compounds including cinnamic aldehyde and NaHCO3 as further active component for providing control of the colonization and/or growth of plant and animal pathogens, such as fungi, insects, arachnids and non-aquatic mollusks, on materials such as plants, plant parts and agricultural products before, during or after processing. The disclosur teaches treating agricultural crops for pathogenic organisms which colonize the surfaces of plant parts and tissues and controlling the level of toxic metabolites present in consumable products derived from plant materials, as well as reducing the health risk associated with their consumption. A method of employing saponin to kill nematodes is also provided.

### Description of the invention

To resolve the problem that exists at present with protection against powdery mildew in horticultural crops, the present invention provides the following use: use of a fungicidal composition as phytosanitary treatment against powdery mildew on horticultural crops caused by Sphaerotheca macularis on greenhouse strawberry cultures, wherein the fungicidal composition comprises a) cinnamic aldehyde in a proportion of between 20% and 55% by weight with respect to the total weight, b) a mixture of at least two ethoxylated castor oils in a proportion of between 20% and 40% by weight with respect to the total weight, with a high degree of ethoxylation of between 30 and 40 moles, c) C11-13 alcohols defined as a liquid product with minimum content of 80% weight/weight of ethoxylated branched C11-13 alcohols with >2.5 EO and defined by CAS number 68439-54-3 in a proportion of between 25% and 40% by weight with respect to the total weight, d) terpene alcohols in a proportion of between 5% and 10% by weight with respect to the total weight, e) calcium alkyl aryl sulfonate solution in a proportion of between 1% and 5% by weight with respect to the total weight, and f) ethoxylated castor oil with a low degree of ethoxylation in a proportion of between 0.4% and 2% by weight with respect to the total weight, with a degree of ethoxylation between 5 and 20 moles, and a method as follows: method for phytosanitary treatment against powdery mildew on horticultural crops caused by Sphaerotheca macularis on greenhouse strawberry cultures, comprising the application of a liquid fungicide formulation prepared from an emulsified concentrate of a fungicidal composition, wherein the fungicidal composition comprises a) cinnamic aldehyde in a proportion of between 20% and 55% by-weight with respect to the total weight, b) a mixture of at least two ethoxylated castor oils with a high degree of ethoxylation in a proportion of between 20% and 40% by weight with respect to the total weight, with a degree of ethoxylation of between 30 and 40 moles, c) C11-13 alcohols defined as a liquid product with minimum content of 80% weight/weight of ethoxylated branched C11-13 alcohols with >2.5 EO and defined by CAS number 68439-54-3 in a proportion of between 25% and 40% by weight with respect to the total weight, d) terpene alcohols in a proportion of between 5% and 10% with respect to the total weight, e) calcium alkyl aryl sulfonate in solution in a proportion of between 1% and 5% by weight with respect to the total weight, and f) ethoxylated castor oil with a low degree of ethoxylation in a proportion of between 0.4% and 2% by weight with respect to the total weight with a degree of ethoxylation of between 5 and 20 moles, by ground spraying on plants using manual sprayers, or motor pumps. The following are particular embodiments:
1) use of a fungicidal composition, as mentioned herein above, wherein the cinnamic aldehyde is present in a proportion of between 30% and 40% by weight with respect to the total weight of the composition; 2) use of a fungicidal composition, as mentioned herein above, wherein the mixture of at least two ethoxylated castor oils with a high degree of ethoxylation is present in a proportion of between 25% and 35% by weight with respect to the total weight; 3) use of a fungicidal composition, as mentioned herein above, wherein the mixture of at least two ethoxylated castor oils with a high degree of ethoxylation has a degree of ethoxylation chosen from the group formed by 35, 36 and 40 moles; 4) use of a fungicidal composition, as mentioned herein above, wherein the C11-13 alcohols defined as a liquid product with minimum content of 80% weight/weight of ethoxylated branched C11-13 alcohols with >2.5 EO and defined by CAS number 68439-54-3 are present in a proportion of between 30% and 35% with respect to the total weight; 5) use of a fungicidal composition, as mentioned herein above, wherein the terpene alcohols are present in a proportion of between 6% and 8% with respect to the total weight; 6) use of a fungicidal composition, as mentioned herein above, wherein the calcium alkyl aryl sulfonate in solution is present in a proportion of between 1.5% and 2% with respect to the total weight; 7) use of a fungicidal composition, as mentioned herein above, wherein the ethoxylated castor oil with a low degree of ethoxylation has a degree of ethoxylation of chosen from the group formed by 5 and 20 moles, and 8) use of a fungicidal composition, as mentioned herein above, wherein the ethoxylated castor oil with a low degree of ethoxylation has a degree of ethoxylation of chosen from the group formed by 9 and 10 moles. The following are further particular embodiments: 1) method for phytosanitary treatment against powdery mildew, as mentioned herein above, in which the concentration of the fungicidal composition is between 0.05 I/hl and 0.5 I/hl, and 2) method for phytosanitary treatment against powdery mildew, as mentioned herein above, in which the concentration of the fungicidal composition is between 0.2 l/hl and 0.3 I/hl.

This fungicidal composition comprises, as the active ingredient, cinnamic aldehyde, combined with ethoxylated castor oil, C11-13 alcohols as defined herein previously, calcium alkyl aryl sulfonate solution and terpene alcohols.

Cinnamic aldehyde is the active ingredient with fungicidal activity, which is combined with terpene alcohols in a compound to improve application of the product, its resistance on leaves, and its effectiveness.

The composition is formulated as an emulsifiable concentrate for the preparation of liquid fungicide formulations for the treatment of strawberry crops.

This fungicidal composition, in spite of being specifically designed for the treatment of Sigatoka in banana and/or plantain plants, and used solely for this, surprisingly has also been found to be effective for the treatment of powdery mildew in horticultural crops, according to experimental trials carried out.

It is preferably delivered by ground spraying using manual sprayers, motor pumps, or other similar means. A product application dose of between 0.05 I/hl and 0.5 I/hl is used, preferably between 0.2 I/hl and 0.3 I/hl.

### Advantages of the invention

This novel use of the fungicidal composition for the treatment of powdery mildew of strawberry crops, that is presented affords numerous advantages over the products currently available, the most important being that it provides a high degree of efficacy against powdery mildew disease in the indicated crops as opposed to synthesized or natural products that are currently known for use on these horticultural crops.

It is important to highlight the advantage that the use of this composition presents a very positive toxicological profile by international standards compared to other chemically synthesised products, thanks to the use of cinnamic aldehyde as the active ingredient. This can lead to declaring this composition to be free of phytosanitary residues, with the clear agricultural, sanitary and economic benefits this represents over synthetic products.

Moreover, it is important to highlight the benefit from using this fungicidal composition, since it does not include antioxidants, as is usual in other compositions with similar substances. This is because the composition used is able to maintain the structure and prevent the active product from degrading due to oxidation, resulting in a stable product, according to international standards for this type of product. As a result, the incorporation of antioxidant substances which may act as contaminants or increase the toxicity or phytotoxicity of the composition is avoided.

Another important advantage of this use is that, by incorporating terpene alcohols, product application efficacy is increased since they help to keep the substance on the plant's leaves, even withstanding rain.

In addition, it is worth noting that the use of terpene alcohols also reduces the amount of mineral oil needed to be added, thereby significantly reducing the toxicity produced by such oils in horticultural crops.

A further advantage of this new use of the fungicidal composition, in addition to the benefits already expounded in terms of an improved toxicological profile, presumable absence of residues, absence of antioxidant substances that may act as contaminants, improvement in product application, greater efficacy, and decreased toxicity of other application adjuvants, is that it is economically competitive compared to the traditional chemical phytosanitary products.

### Preferred embodiment of the invention

The use of the fungicidal composition presented consists of carrying out phytosanitary treatment against powdery mildew in horticultural crops. The horticultural crops are strawberry.

The fungicidal composition used is as defined herein previously.

The cinnamic aldehyde is present in a proportion of between 20% and 55% by weight, preferably 30-40% by weight, with respect to the total weight of the composition.

The mixture of ethoxylated castor oils comprises at least two ethoxylated castor oils with a high degree of ethoxylation. The degree of ethoxylation of these oils is between and moles, and more preferably chosen from the group formed by 35, 36 and 40 moles. This mixture of ethoxylated castor oils with a high degree of ethoxylation is present in a proportion of between 20% and 40% by weight, preferably between 25% and 35% by weight, with respect to the total weight of the composition.

Furthermore, at least an ethoxylated castor oil with a low degree of ethoxylation is also used. The degree of ethoxylation of this oil is between 5 and 20 moles, preferably between 8 and 15 moles, and more preferably chosen from the group formed by 9 and 10 moles. This ethoxylated castor oil with a low degree of ethoxylation is present in a proportion of between 0.4% and 2% by weight, preferably between 0.5% and 1% by weight, with respect to the total weight of the composition.

The C11-13 alcohols as defined herein previously are present in a proportion of between 25% and 40% by weight preferably between 30% and 35% by weight, with respect to the total weight of the composition.

The terpene alcohols, for example α-terpineol, are present in a proportion of between 5% and 10% by weight, preferably between 6% and 8% by weight, with respect to the total weight of the composition.

The calcium alkyl aryl sulfonate solution is present in a proportion of between 1% and 5% by weight, preferably between 1.5% and 2% by weight, with respect to the total weight of the composition.

Use of this fungicidal composition is by spraying on plants, preferably delivered by ground spraying with manual sprayers, motor pumps or other similar means. A product application dose of between 0.05 I/hl and 0.5 I/hl is used, preferably between 0.2 I/hl and 0.3 I/hl.

Experimental trials carried out using this fungicidal composition by spraying on horticultural crops have shown its notable effectiveness against powdery mildew.

### Application conditions and results obtained experimentally in the field

To reflect the efficacy of the invention presented in this description, comparative studies were performed in commercial conditions. Thus, commercial application of the present fungicidal composition is carried out by ground spraying with manual sprayers, motor pumps, or other similar means. The invention is further characterised by a specific use with a product application dose of between 0.05 I/hl and 0.5 I/hl, and preferably between 0.2 I/hl and 0.3 I/hl of the composition described herein.

The conditions of the application solution will be those normally used for the crops described. The following examples show the spraying case.

### Example 1: Application of the fungicidal composition for the control of powdery mildew (Sphaerotheca macularis) in strawberries.

The aim of the protocol was to evaluate the effect of the fungicidal composition applied in different doses for the control of powdery mildew (Sphaerotheca macularis) in greenhouse strawberry cultivation and compare its efficacy against that of a standard chemical phytosanitary product such as myclobutanil. Location: Almeria (Spain). Variety: Benicia.

### Treatments:

Untreated control specimen
Myclobutanil 20 g/l, dose 30 ml/hl
Fungicidal composition, dose 0.2 I/hl
Fungicidal composition, dose 0.3 I/hl
Number of applications: 4
Use of solution: 1000 I/ha.
Parameters evaluated: Efficacy.

### Results:

Efficacy data were taken at the following times.
T0: 0, before first application.
T1: 10 days after the first application and just before the second application.
T2: 9 days after the second application and just before the third application.
T3: 9 days after the third application and just before the fourth application
T4: 7 days after the fourth application.

The efficacy results are shown in the following table:

| Treatment/efficacy | % (T0) | %(T1) | %(T2) | %(T3) | %(T4) |
|---|---|---|---|---|---|
| Control specimen | 0 | 0 | 0 | 0 | 0 |
| Myclobutanil | 0 | 92.4 | 97.0 | 95.8 | 98.3 |
| Fungicidal composition 0.2 I/hl | 0 | 83.5 | 95.3 | 85.7 | 92.3 |
| Fungicidal composition 0.3 I/hl | 0 | 72.3 | 87.1 | 84.5 | 80.5 |

The conclusions of the example indicate that the agricultural composition shows very good results in terms of efficacy and similar results, without significant differences compared to myclobutanil in strawberries, revealing better results at a dose of 0.3 l/hl compared to at a dose of 0.2 l/hl.

In these conditions and doses, the composition presented herein shows agronomic results against powdery mildew of the same order or higher than chemical or natural products registered and used for this same purpose.

## Claims

1. Use of a fungicidal composition as phytosanitary treatment against powdery mildew on horticultural crops caused by Sphaerotheca macularis on greenhouse strawberry cultures,
wherein the fungicidal composition comprises
a) cinnamic aldehyde in a proportion of between 20% and 55% by weight with respect to the total weight,
b) a mixture of at least two ethoxylated castor oils in a proportion of between 20% and 40% by weight with respect to the total weight, with a high degree of ethoxylation of between 30 and 40 moles,
c) C11-13 alcohols defined as a liquid product with minimum content of 80% weight/weight of ethoxylated branched C11-13 alcohols with >2.5 EO and defined by CAS number 68439-54-3 in a proportion of between 25% and 40% by weight with respect to the total weight,
d) terpene alcohols in a proportion of between 5% and 10% by weight with respect to the total weight,
e) calcium alkyl aryl sulfonate solution in a proportion of between 1% and 5% by weight with respect to the total weight, and
f) ethoxylated castor oil with a low degree of ethoxylation in a proportion of between 0.4% and 2% by weight with respect to the total weight, with a degree of ethoxylation between 5 and 20 moles.

2. Use of a fungicidal composition according to claim 1 wherein the cinnamic aldehyde is present in a proportion of between 30% and 40% by weight with respect to the total weight of the composition.

3. Use of a fungicidal composition, according to either of the preceding claims, wherein the mixture of at least two ethoxylated castor oils with a high degree of ethoxylation is present in a proportion of between 25% and 35% by weight with respect to the total weight.

4. Use of a fungicidal composition, according to any of the preceding claims, wherein the mixture of at least two ethoxylated castor oils with a high degree of ethoxylation has a degree of ethoxylation chosen from the group formed by 35, 36 and 40 moles.

5. Use of a fungicidal composition, according to any of the preceding claims, wherein the C11-13 alcohols defined as a liquid product with minimum content of 80% weight/weight of ethoxylated branched C11-13 alcohols with >2.5 EO and defined by CAS number 68439-54-3 are present in a proportion of between 30% and 35% with respect to the total weight.

6. Use of a fungicidal composition, according to any of the preceding claims, wherein the terpene alcohols are present in a proportion of between 6% and 8% with respect to the total weight.

7. Use of a fungicidal composition, according to any of the preceding claims, wherein the calcium alkyl aryl sulfonate in solution is present in a proportion of between 1.5% and 2% with respect to the total weight.

8. Use of a fungicidal composition, according to any of the preceding claims, wherein the ethoxylated castor oil with a low degree of ethoxylation has a degree of ethoxylation chosen from the group formed by 5 and 20 moles.

9. Use of a fungicidal composition, according to any of the preceding claims, wherein the ethoxylated castor oil with a low degree of ethoxylation has a degree of ethoxylation chosen from the group formed by 9 and 10 moles.

10. Method for phytosanitary treatment against powdery mildew on horticultural crops caused by Sphaerotheca macularis on greenhouse strawberry cultures, comprising the application of a liquid fungicide formulation prepared from an emulsified concentrate of a fungicidal composition,
wherein the fungicidal composition comprises
a) cinnamic aldehyde in a proportion of between 20% and 55% by-weight with respect to the total weight,
b) a mixture of at least two ethoxylated castor oils with a high degree of ethoxylation in a proportion of between 20% and 40% by weight with respect to the total weight, with a degree of ethoxylation of between30 and 40 moles,
c) C11-13 alcohols defined as a liquid product with minimum content of 80% weight/weight of ethoxylated branched C11-13 alcohols with >2.5 EO and defined by CAS number 68439-54-3 in a proportion of between 25% and 40% by weight with respect to the total weight,
d) terpene alcohols in a proportion of between 5% and 10% with respect to the total weight,
e) calcium alkyl aryl sulfonate in solution in a proportion of between 1% and 5% by weight with respect to the total weight, and
f) ethoxylated castor oil with a low degree of ethoxylation in a proportion of between 0.4% and 2% by weight with respect to the total weight with a degree of ethoxylation of between 5 and 20 moles, by ground spraying on plants using manual sprayers, or motor pumps.

11. Method for phytosanitary treatment against powdery mildew according to claim 10 in which the concentration of the fungicidal composition is between 0.05 I/hl and 0.5 I/hl.

12. Method for phytosanitary treatment against powdery mildew according to claim 11 in which the concentration of the fungicidal composition is between 0.2 I/hl and 0.3 I/hl

## Patentansprüche

1. Verwendung einer fungiziden Zusammensetzung als Pflanzenschutzmittbehandlung gegen echten Mehltau an Gartenbaukulturen, verursacht durch *Sphaerotheca macularis* an Erdbeerkulturen im Gewächshaus,
wobei die fungizide Zusammensetzung umfasst:
a) Zimtaldehyd in einem Verhältnis von zwischen 20 Gew.-% und 55 Gew.-% bezogen auf das Gesamtgewicht,
b) eine Mischung aus mindestens zwei ethoxylierten Rizinusölen mit einem hohen Ethoxylierungsgrad von zwischen 30 und 40 Mol in einem Verhältnis von zwischen 20 Gew.-% und 40 Gew.-% bezogen auf das Gesamtgewicht,
c) C11-13-Alkohole, definiert als ein flüssiges Produkt mit einem Mindestgehalt von 80 Gew.-%/Gew. an ethoxylierten verzweigten C11-13-Alkoholen mit >2,5 EO und definiert durch die CAS-Nummer 68439-54-3, in einem Verhältnis von zwischen 25 Gew.-% und 40 Gew.-% bezogen auf das Gesamtgewicht,
d) Terpenalkohole in einem Verhältnis von zwischen 5 Gew.-% und 10 Gew.-% bezogen auf das Gesamtgewicht,
e) Calciumalkylarylsulfonatlösung in einem Verhältnis von zwischen 1 Gew.-% und 5 Gew.-% bezogen auf das Gesamtgewicht, und
f) ethoxyliertes Rizinusöl mit einem niedrigen Ethoxylierungsgrad in einem Verhältnis von zwischen 0,4 Gew.-% und 2 Gew.-% bezogen auf das Gesamtgewicht, mit einem Ethoxylierungsgrad von zwischen 5 und 20 Mol.

2. Verwendung einer fungiziden Zusammensetzung nach Anspruch 1, wobei Zimtaldehyd in einem Verhältnis von zwischen 30 Gew.-% und 40 Gew.-% bezogen auf das Gesamtgewicht der Zusammensetzung vorhanden ist.

3. Verwendung einer fungiziden Zusammensetzung nach einem der vorangehenden Ansprüche, wobei die Mischung aus mindestens zwei ethoxylierten Rizinusölen mit einem hohen Ethoxylierungsgrad in einem Verhältnis von zwischen 25 Gew.-% und 35 Gew.-% bezogen auf das Gesamtgewicht vorhanden ist.

4. Verwendung einer fungiziden Zusammensetzung nach einem der vorangehenden Ansprüche, wobei die Mischung aus mindestens zwei ethoxylierten Rizinusölen mit einem hohen Ethoxylierungsgrad einen Ethoxylierungsgrad aufweist, der aus der Gruppe ausgewählt ist, die aus 35, 36 und 40 Mol besteht.

5. Verwendung einer fungiziden Zusammensetzung nach einem der vorangehenden Ansprüche, wobei die C11-13-Alkohole, definiert als ein flüssiges Produkt mit einem Mindestgehalt von 80 Gew.-%/Gew. an ethoxylierten verzweigten C11-13-Alkoholen mit >2,5 EO und definiert durch die CAS-Nummer 68439-54-3, in einem Verhältnis von zwischen 30 Gew.-% und 35 Gew.-% bezogen auf das Gesamtgewicht vorhanden sind.

6. Verwendung einer fungiziden Zusammensetzung nach einem der vorangehenden Ansprüche, wobei die Terpenalkohole in einem Verhältnis von zwischen 6 Gew.-% und 8 Gew.-% bezogen auf das Gesamtgewicht vorhanden sind.

7. Verwendung einer fungiziden Zusammensetzung nach einem der vorangehenden Ansprüche, wobei das Calciumalkylarylsulfonat in Lösung in einem Verhältnis von zwischen 1,5 Gew.-% und 2 Gew.-% bezogen auf das Gesamtgewicht vorhanden ist.

8. Verwendung einer fungiziden Zusammensetzung nach einem der vorangehenden Ansprüche, wobei das ethoxylierte Rizinusöl mit einem niedrigen Ethoxylierungsgrad einen Ethoxylierungsgrad aufweist, der aus der Gruppe ausgewählt ist, die aus 5 und 20 Mol besteht.

9. Verwendung einer fungiziden Zusammensetzung nach einem der vorangehenden Ansprüche, wobei das ethoxylierte Rizinusöl mit einem niedrigen Ethoxylierungsgrad einen Ethoxylierungsgrad aufweist, der aus der Gruppe ausgewählt ist, die aus 9 und 10 Mol besteht.

10. Verfahren zur Pflanzenschutzbehandlung gegen echten Mehltau an Gartenbaukulturen, verursacht durch *Sphaerotheca macularis* an Erdbeerkulturen im Gewächshaus, umfassend die Anwendung einer flüssigen Fungizidformulierung, die aus einem Emulsionskonzentrat einer fungiziden Zusammensetzung hergestellt wird,
wobei die fungizide Zusammensetzung umfasst:
a) Zimtaldehyd in einem Verhältnis von zwischen 20 Gew.-% und 55 Gew.-% bezogen auf das Gesamtgewicht,
b) eine Mischung aus mindestens zwei ethoxylierten Rizinusölen mit einem hohen Ethoxylierungsgrad in einem Verhältnis von zwischen 20 Gew.-% und 40 Gew.-% bezogen auf das Gesamtgewicht, mit einem Ethoxylierungsgrad von zwischen 30 und 40 Mol,
c) C11-13-Alkohole, definiert als ein flüssiges Produkt mit einem Mindestgehalt von 80 Gew.-%/Gew. an ethoxylierten verzweigten C11-13-Alkoholen mit >2,5 EO und definiert durch die CAS-Nummer 68439-54-3, in einem Verhältnis von zwischen 25 Gew.-% und 40 Gew.-% bezogen auf das Gesamtgewicht,
d) Terpenalkohole in einem Verhältnis von zwischen 5 Gew.-% und 10 Gew.-% bezogen auf das Gesamtgewicht,
e) Calciumalkylarylsulfonat in Lösung in einem Verhältnis von zwischen 1 Gew.-% und 5 Gew.-% bezogen auf das Gesamtgewicht, und
f) ethoxyliertes Rizinusöl mit einem niedrigen Ethoxylierungsgrad in einem Verhältnis von zwischen 0,4 Gew.-% und 2 Gew.-% bezogen auf das Gesamtgewicht, mit einem Ethoxylierungsgrad von zwischen 5 und 20 Mol,
durch bodengebundenes Spritzen auf Pflanzen mittels Handsprühgeräten oder Motorpumpen.

11. Verfahren zur Pflanzenschutzbehandlung gegen echten Mehltau nach Anspruch 10, bei dem die Konzentration der fungiziden Zusammensetzung zwischen 0,05 I/hl und 0,5 I/hl beträgt.

12. Verfahren zur Pflanzenschutzbehandlung gegen echten Mehltau nach Anspruch 11, bei dem die Konzentration der fungiziden Zusammensetzung zwischen 0,2 I/hl und 0,3 I/hl beträgt.

## Revendications

1. Utilisation d'une composition fongicide en tant que traitement phytosanitaire contre l'oïdium des cultures horticoles causé par *Sphaerotheca macularis* sur des cultures de fraisiers en serre,
dans laquelle la composition fongicide comprend :
a) de l'aldéhyde cinnamique dans une proportion comprise entre 20 % et 55 % en poids par rapport au poids total,
b) un mélange d'au moins deux huiles de ricin éthoxylées dans une proportion comprise entre 20 % et 40 % en poids par rapport au poids total, avec un degré d'éthoxylation élevé compris entre 30 et 40 moles,
c) des alcools en C11-13, définis comme un produit liquide ayant une teneur minimale de 80 % poids/poids en alcools ramifiés en C11-13 éthoxylés avec >2,5 OE et définis par le numéro CAS 68439-54-3, dans une proportion comprise entre 25 % et 40 % en poids par rapport au poids total,
d) des alcools terpéniques dans une proportion comprise entre 5 % et 10 % en poids par rapport au poids total,
e) une solution de sulfonate de calcium alkylaryle dans une proportion comprise entre 1 % et 5 % en poids par rapport au poids total, et
f) une huile de ricin éthoxylée avec un faible degré d'éthoxylation dans une proportion comprise entre 0,4 % et 2 % en poids par rapport au poids total, avec un degré d'éthoxylation compris entre 5 et 20 moles.

2. Utilisation d'une composition fongicide selon la revendication 1, dans laquelle l'aldéhyde cinnamique est présent dans une proportion comprise entre 30 % et 40 % en poids par rapport au poids total de la composition.

3. Utilisation d'une composition fongicide selon l'une quelconque des revendications précédentes, dans laquelle le mélange d'au moins deux huiles de ricin éthoxylées avec un degré d'éthoxylation élevé est présent dans une proportion comprise entre 25 % et 35 % en poids par rapport au poids total.

4. Utilisation d'une composition fongicide selon l'une quelconque des revendications précédentes, dans laquelle le mélange d'au moins deux huiles de ricin éthoxylées avec un degré d'éthoxylation élevé présente un degré d'éthoxylation choisi dans le groupe constitué de 35, 36 et 40 moles.

5. Utilisation d'une composition fongicide selon l'une quelconque des revendications précédentes, dans laquelle les alcools en C11-13, définis comme un produit liquide ayant une teneur minimale de 80 % poids/poids en alcools ramifiés en C11-13 éthoxylés avec >2,5 OE et définis par le numéro CAS 68439-54-3, sont présents dans une proportion comprise entre 30 % et 35 % par rapport au poids total.

6. Utilisation d'une composition fongicide selon l'une quelconque des revendications précédentes, dans laquelle les alcools terpéniques sont présents dans une proportion comprise entre 6 % et 8 % par rapport au poids total.

7. Utilisation d'une composition fongicide selon l'une quelconque des revendications précédentes, dans laquelle le sulfonate de calcium alkylaryle en solution est présent dans une proportion comprise entre 1,5 % et 2 % par rapport au poids total.

8. Utilisation d'une composition fongicide selon l'une quelconque des revendications précédentes, dans laquelle l'huile de ricin éthoxylée avec un faible degré d'éthoxylation présente un degré d'éthoxylation choisi dans le groupe constitué de 5 et 20 moles.

9. Utilisation d'une composition fongicide selon l'une quelconque des revendications précédentes, dans laquelle l'huile de ricin éthoxylée avec un faible degré d'éthoxylation présente un degré d'éthoxylation choisi dans le groupe constitué de 9 et 10 moles.

10. Procédé de traitement phytosanitaire contre l'oïdium des cultures horticoles causé par *Sphaerotheca macularis* sur des cultures de fraisiers en serre, comprenant l'application d'une formulation fongicide liquide préparée à partir d'un concentré émulsionnable d'une composition fongicide, dans laquelle la composition fongicide comprend :
a) de l'aldéhyde cinnamique dans une proportion comprise entre 20 % et 55 % en poids par rapport au poids total,
b) un mélange d'au moins deux huiles de ricin éthoxylées avec un degré d'éthoxylation élevé dans une proportion comprise entre 20 % et 40 % en poids par rapport au poids total, avec un degré d'éthoxylation compris entre 30 et 40 moles,
c) des alcools en C11-13, définis comme un produit liquide ayant une teneur minimale de 80 % poids/poids en alcools ramifiés en C11-13 éthoxylés avec >2,5 OE et définis par le numéro CAS 68439-54-3, dans une proportion comprise entre 25 % et 40 % en poids par rapport au poids total,
d) des alcools terpéniques dans une proportion comprise entre 5 % et 10 % par rapport au poids total,
e) une solution de sulfonate de calcium alkylaryle dans une proportion comprise entre 1 % et 5 % en poids par rapport au poids total, et
f) une huile de ricin éthoxylée avec un faible degré d'éthoxylation dans une proportion comprise entre 0,4 % et 2 % en poids par rapport au poids total, avec un degré d'éthoxylation compris entre 5 et 20 moles,
par pulvérisation terrestre sur les plantes au moyen de pulvérisateurs manuels ou de motopompes.

11. Procédé de traitement phytosanitaire contre l'oïdium selon la revendication 10, dans lequel la concentration de la composition fongicide est comprise entre 0,05 I/hl et 0,5 I/hl.

12. Procédé de traitement phytosanitaire contre l'oïdium selon la revendication 11, dans lequel la concentration de la composition fongicide est comprise entre 0,2 I/hl et 0,3 I/hl.
